# EUROPÄISCHE PATENTSCHRIFT

(11) **EP 1 144 818 B1**
(45) Veröffentlichungstag und Bekanntmachung des Hinweises auf die Patenterteilung: **09.03.2005**
(21) Anmeldenummer: 00979433.0
(22) Anmeldetag: 19.10.2000
(51) Int. Cl.: F01P 3/20, F01P 7/16, B60H 1/00, B60H 1/14

(54) **VERFAHREN UND VORRICHTUNG ZUM TRANSPORT VON IN EINEM KRAFTFAHRZEUG ENTSTEHENDER WÄRMEENERGIE**
METHOD AND DEVICE FOR TRANSPORTING HEAT ENERGY THAT IS PRODUCED IN A MOTOR VEHICLE
PROCEDE ET DISPOSITIF POUR LE TRANSPORT DE L'ENERGIE THERMIQUE PRODUITE DANS UN VEHICULE AUTOMOBILE

(30) Priorität: 11.11.1999 DE 19954327
(43) Veröffentlichungstag der Anmeldung: 17.10.2001
(73) Patentinhaber: ROBERT BOSCH GMBH, 70442 Stuttgart (DE)
(72) Erfinder: HOHL, Reiner, 70197 Stuttgart (DE)
(86) Internationale Anmeldenummer: PCT/DE2000/003666
(87) Internationale Veröffentlichungsnummer: WO 2001/034952

(56) Entgegenhaltungen:
- DE-A- 19 719 792
- FR-A- 2 748 428
- US-A- 5 251 588
- US-A- 5 531 285

## Beschreibung

### Stand der Technik

Die Erfindung betrifft ein Verfahren und eine Vorrichtung zum Transport von in einem Kraftfahrzeug entstehender Wärmeenergie gemäß den Oberbegriffen der Ansprüche 1 bzw. 8.

Die Energie, die an Fahrzeugteilen bei deren Betrieb entsteht, wird bislang meist ungenutzt und ungesteuert an die Umgebung abgegeben. Lediglich beim Verbrennungsmotor wird die sich in seinem Kühlkreislauf enthaltene Wärmeenergie zur Beheizung des Fahrgastinnenraums über einen Heizungswärmetauscher genutzt.

Eine gattungsgemäßes Verfahren und eine gattungsgemäße Vorrichtung sind aus der US 5 251 588 bekannt, gemäß denen die Kühkreislaüfe eines Verbrennungsmotors und einer elektronischen Komponente miteinander koppelbar sind.

Aufgabe der Erfindung ist es, ein verbessertes Verfahren und eine verbesserte Vorrichtung zu schaffen, mittels dem bzw. der die Wärmeenergie, die im Betrieb des Kraftfahrzeugs entsteht, so genutzt wird, daß dadurch der Energieverbrauch des Kraftfahrzeugs reduziert wird.

### Vorteile der Erfindung

Dies wird durch ein Verfahren gelöst und eine vorrichtung gemäß den Ansprüchen 1 bzw. 8.

Insbesondere wird die Erfindung zum Abführen der Wärmeenergie sogenannter Leistungselektronik verwendet, d. h. Elektronik, die durch eine hohe elektrische Aufnahmeleistung gekennzeichnet ist.

Die beim Betrieb von elektronischen Komponenten entstehende Abwärme wird bislang völlig ungenutzt im Kraftfahrzeug an die Umgebungsluft abgegeben. Die Leistung und die Anzahl der elektronischen Komponenten und damit die Menge der abzuführenden Wärme von elektronischen Komponenten nimmt von Kraftfahrzeuggenerätion zu Kraftfahrzeuggeneration zu. Darüber hinaus sind aber im Kraftfahrzeug Teile, wobei hier der Begriff Teile nicht auf ein Einzelteil beschränkt sein soll, sondern ganze Baugruppen darunterfallen, vorgesehen, die zu ihrem gewünschten Betrieb Wärme benötigen. Während bei elektronischen Komponenten also einerseits Aufwendungen wie großflächige Kühlrippen zur Abgabe von Wärmeenergie an die Umgebungsluft vorgesehen sind, werden andererseits zusätzliche Maßnahmen getroffen, um andere Fahrzeugteile zu beheizen. Beispielsweise ist es aufgrund des zunehmenden Wirkungsgrads der Verbrennungsmotoren, bei Dieselfahrzeugen zur Erzielung eines ausreichend hohen Heizkomforts, inzwischen notwendig geworden, elektrische Zusatzheizungen zur Beheizung des Fahrzeuginnenraums vorzusehen, wodurch aber der elektrische Energieverbrauch und auch der Kraftstoffverbrauch steigen. Aufgrund des höheren elektrischen Energiebedarfs in einem Kraftfahrzeug wird beispielsweise in Zukunft ein 42 Volt-Startergenerator eingesetzt werden, dessen Leistungselektronik, z.B. der Pulswechselrichter eine Verlustwärmeleistung von mehr als ein Kilowatt haben dürfte. Diese Energie wird durch die Erfindung beispielsweise in den Kühlkreislauf des Verbrennungsmotors oder unmittelbar in einen Heizungswärmetauscher zur Fahrgastinnenraumbeheizung geleitet.

Die Erfindung sieht vor, den Volumenstrom von Kühlfluid in wenigstens einem der beiden Kühlkreisläufe bedarfsgerecht über wenigstens eine in dem Kühlkreislauf integrierte elektrische Kühlfluidpumpe zu steuern. Bislang werden als Kühlfluidpumpen mechanische Pumpen, die mit dem Verbrennungsmotor gekoppelt sind, eingesetzt. Zur optimalen Anpassung des Wärmetransports in einem Kühlkreislauf wird jedoch nun vorzugsweise eine elektrische Kühlfluidpumpe eingesetzt, durch die der Wärmetransport genau und bedarfsgerecht innerhalb des Kühlkreislaufs oder zwischen miteinander gekoppelten Kreisläufen möglich ist.

Der Volumenstrom im Kühlkreislauf des Verbrennungsmotors wird abhängig von der Motortemperatur und dem Lastbereich des Verbrennungsmotors, indem er sich im jeweiligen Zeitpunkt befindet, gesteuert.

Vorteilhafte Ausgestaltungen der Erfindung ergeben sich aus den Unteransprüchen.

Vorzugsweise wird die abgeführte Wärmeenergie der elektronischen Komponente gesteuert an das zu beheizende Fahrzeugteil weitergeleitet, d. h. die dem Fahrzeugteil zugeführte Wärmemenge wird gesteuert, um zum Beispiel seine Überhitzung zu verhindern oder es auf seine optimale Temperatur einzustellen.

Gemäß einer bevorzugten Ausführungsform ist dem Kühlkreislauf der Komponente ein eigener Kühler zugeordnet. Abhängig von einer vorbestimmten, zulässigen oder gewünschten Höchsttemperatur der Komponente und/oder einer vorbestimmten Grenztemperatur des zu beheizenden Fahrzeugteils wird der Kühlkreislauf der Komponente mit dem des Fahrzeugteils und/oder dem eigenen Kühler gekoppelt. Es sind Situationen denkbar, bei denen beispielsweise die Abfuhr der Wärmeenergie der elektronischen Komponente zu dem zu beheizenden Bauteil nicht ausreicht, um die Komponente ausreichend zu kühlen. Dann muß ein eigener Kühler zugeschaltet werden, über den Wärmeenergie zum Beispiel an die Umgebung abgegeben wird. Darüber hinaus kann auch das zu beheizende Fahrzeugteil einen optimalen Temperaturbereich haben, der nicht über- oder unterschritten werden sollte, um die Leistungsfähigkeit beizubehalten. Beispielsweise sollte ein Verbrennungsmotor, wenn er seine optimale Betriebstemperatur hat, nicht abgekühlt werden. Läge jedoch die Temperatur eines aus dem Kühlkreislauf der Komponente in den Kühlkreislauf des Verbrennungsmotors zugeführten Kühlfluids unter der gewünschten Temperatur im Kühlkreislauf des Verbrennungsmotors, so würde eine Koppelung beider Kreisläufe zu einer unerwünschten zusätzlichen Kühlung des Verbrennungsmotors führen. Umge- . kehrt sollte jedoch der Kühler des der Komponente zugeordneten Kühlkreislaufes abgeschaltet werden, wenn der Verbrennungsmotor nicht warmgelaufen ist. Dann sollte nämlich dem Kühlkreislauf des Verbrennungsmotors möglichst viel Wärme von der Komponente zugeführt werden, damit dieser möglichst schnell seine optimale Betriebstemperatur erreicht.

Zur Erreichung der vorgenannten Ziele ist es auch vorteilhaft, daß die Kühlkreisläufe der Komponente und des Verbrennungsmotors dann voneinander entkoppelt sind und daß vorzugsweise zusätzlich der Kühlkreislauf der Komponente Wärmeenergie dann zum eigenen Kühler fördert, wenn die Austrittstemperatur des Kühlfluids des Kühlkreislaufs der Komponente unter einer vorbestimmten Arbeitstemperatur des Verbrennungsmotors, die der Verbrennungsmotor zu diesem Zeitpunkt bereits erreicht hat, liegt.

Das erfindungsgemäße Verfahren wird auch bei ausgeschaltetem Verbrennungsmotor angewandt, um zum Beispiel die Energie der noch warmen Komponente zur Beheizung des Fahrgastinnenraums zu nutzen.

Das erfindungsgemäße Verfahren bietet sich insbesondere für Hybridmotoren an, bei denen der Verbrennungsmotor oft ausgeschaltet ist und in der Zwischenzeit Elektromotoren oder andere elektronische Komponenten in Betrieb sind und Wärme erzeugen.

Die erfindungsgemäße Vorrichtung sieht vor, daß die wärmeabführende Leitung Teil eines der Komponente zugeordneten Kühlkreislaufs ist, der mit dem Kühlkreislauf des Verbrennungsmotors verbunden ist. Darüber hinaus kann der Kühlkreislauf der Komponente aber auch unmittelbar mit dem Heizungswärmetauscher verbunden sein oder einen eigenen Heizungswärmetauscher aufweisen. Bei diesen Ausgestaltungen steht die Nutzung der Wärme der Komponente zur Beheizung des Fahrgastinnenraums im Vordergrund.

Vorzugsweise sind die Kühlkreisläufe der Komponente und des Verbrennungsmotors miteinander koppelbar und wieder voneinander entkoppelbar, um eine Steuerung des Wärmetransports zu erreichen.

Um den Energieverlust bei Wärmetauschern zu vermeiden, sind die Kühlkreisläufe der Komponente und des Verbrennungsmotors vorzugsweise so verbunden, daß Kühlfluid des einen Kühlkreislaufs in den des anderen strömen kann, d.h. die Kühlkreisläufe gehen strömungsmäßig teilweise ineinander über.

### Zeichnungen

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 ein Blockschaltbild eines Kühlkreislaufs eines Verbrennungsmotors nach dem Stand der Technik,
- Fig. 2 ein Blockschaltbild einer ersten Ausführungsform der erfindungsgemäßen Vorrichtung zur Durchführung des erfindungsgemäßen Verfahrens,
- Fig. 3 ein Blockschaltbild einer zweiten Ausführungsform der erfindungsgemäßen Vorrichtung zur Durchführung des erfindungsgemäßen Verfahrens und
- Fig. 4 ein Blockschaltbild einer dritten Ausführungsform der erfindungsgemäßen Vorrichtung zur Durchführung des erfindungsgemäßen Verfahrens.

### Beschreibung der Ausführungsbeispiele

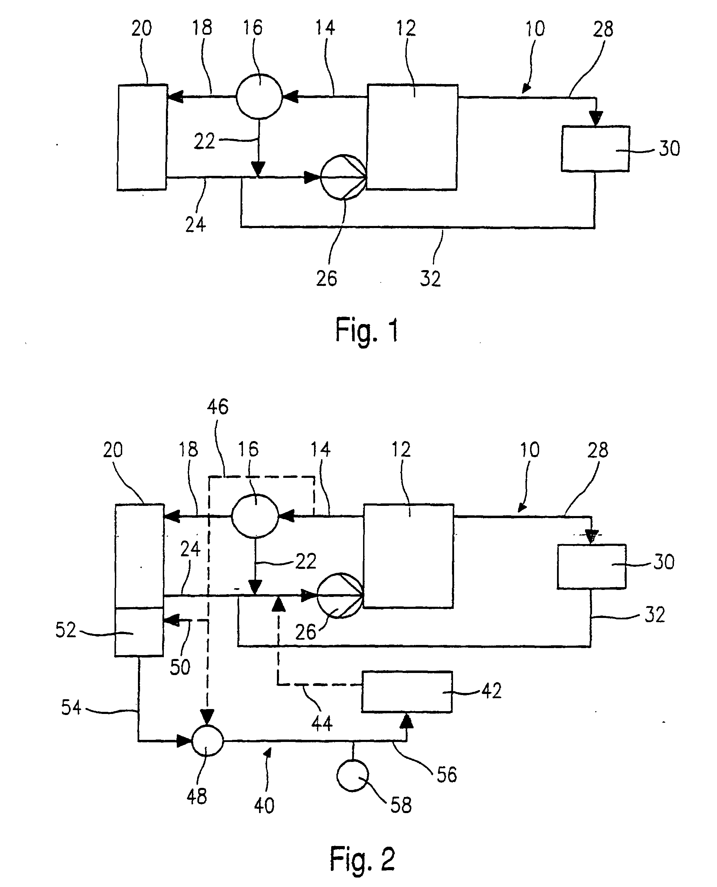

In Fig. 1 ist ein bekannter Kühlkreislauf 10 eines Verbrennungsmotors 12 eines Kraftfahrzeuges gezeigt. Vom Verbrennungsmotor 12 führt eine Leitung 14 des Kühlkreislaufs 10 zu einem Thermostatventil 16. Vom Thermostatventil 16 wiederum zweigt eine Leitung 18 zu einem Kühler 20 und eine Leitung 22 zu einer Verbindungsleitung 24 zwischen einem Kühler 20 und einer mit dem Verbrennungsmotor 12 gekoppelten mechanischen Kühlfluidpumpe 26 ab. Die Kühlfluidpumpe 26 wiederum ist strömungsmäßig mit dem Verbrennungsmotor 12 verbunden. Vom Verbrennungsmotor 12 zweigt eine Leitung 28 zu einem Heizungswärmetauscher 30, der der Beheizung des Fahrgastinnenraums dient, ab. Ausgangsseitig verbindet eine Leitung 32 den Heizungswärmetauscher 30 mit der Verbindungsleitung 24.

Bei Temperaturen des Kühlfluids von unter ungefähr 90°C erlaubt das Thermostatventil 16 nur eine Strömungsleitung des über die Leitung 14 ankommenden Kühlfluids über die Leitung 22 zur Verbindungsleitung 24. Überschreitet die Kühlfluidtemperatur aber 90°C. öffnet das Thermostatventil 26 den Kreislauf zum Kühler 20 hin und schließt gleichzeitig die Leitung 22.

In den in Fig. 1 gezeigten herkömmlichen Kühlkreislauf des Verbrennungsmotors 12 ist, wie in Fig. 2 zu sehen ist, noch der Kühlkreislauf 40 einer elektronischen Komponente 42, z.B. in Form eines Pulswechselrichters für einen 42 Volt-Startergenerator (nicht gezeigt) integriert. Sämtliche bereits in Zusammenhang mit Fig. 1 beschriebenen Teile werden, sofern sie identisch oder mit gleicher Funktion in anderen Ausführungsformen vorkommen bzw. verwendet werden, auch in den Fig. 2 bis 4 mit den bereits eingeführten Bezugszeichen versehen. Der Kühlkreisauf 40 der elektronischen Komponente 42 ist mit dem Kühlkreislauf 10 des Verbrennungsmotors koppelbar und von ihm entkoppelbar. Der Kühlkreislauf 40 der Komponente 42 umfaßt mehrere Leitungen, die im folgenden erläutert werden.

Eine Leitung 44 verbindet die Komponente 42 mit der Verbindungsleitung 24 im Kühlkreislauf 10 strömungsmäßig, so daß das Kühlfluid in der Leitung 44 in den Kühlkreislauf 10 strömt. Der Teil der Verbindungsleitung 24 stromabwärts der Einmündung der Leitung 44, die mechanische Kühlfluidpumpe 26, der Verbrennungsmotor 12 (genauer gesagt die im Motorblock vorgesehenen Kühlfluid führenden Leitungen) und ein stromaufwärtiger Teil der Leitung 14 sind zugleich auch Bestandteil des Kühlkreislaufs 40. Von der Leitung 14 zweigt schließlich eine Leitung 46 ab die zu einem Drei-Wege-Ventil 48 führt. Von der Leitung 46 zweigt noch eine Leitung 50 zu einem dem Kühlkreislauf 40 zugeordneten eigenen Kühler 52 ab. Ausgangsseitig ist der Kühler 52 über eine Leitung 54 mit dem Drei-Wege-Ventil 48 verbunden. Das Drei-Wege-Ventil 48 ist ausgangsseitig wiederum über die Leitung 56 mit der Komponente 42 verbunden. wodurch der Kühlkreislauf 40 geschlossen ist. in der Leitung 56 sitzt ein Temperaturfühler 58 der die Temperatur des Kühlfluids an dieser Stelle ermittelt.

Die in Figur 2 gezeigte, aus zwei miteinander koppelbaren Kühlkreisläufen 10, 40 gebildete Vorrichtung dient zum Transport von in einem Kraftfahrzeug entstehender Wärmeenergie. Die Vorrichtung ist beispielsweise Teil eines Hybrid-Kraftfahrzeugs, welches einen Elektroantrieb und einen Verbrennungsmotor aufweist. Die Leistungselektronik, die die Komponente 42 bildet, erwärmt sich beim Start des Fahrzeugs, z. B. beim Anfahren mit elektrischem Antrieb so stark, daß sie eine Verlustwärmeleistung von mehr als 1 kW aufweisen kann. Diese Wärmeenergie dient zur Erwärmung anderer Fahrzeugteile, vorliegend nicht nur eines Teils, sondern einer gesamten Baugruppe in Form des Kühlkreislaufs 10, wie im folgenden erläutert wird.

Die Abwärme der Komponente 42 wird über Kühlfluid und die Leitung 44 in den Kühlkreislauf 10 eingespeist, wo sie unmittelbar nach dem Starten des Kraftfahrzeugs der schnellen Erwärmung des Verbrennungsmotors 12 dient. Motorausgangsseitig wird ein Teilvolumenstrom des sich in der Leitung 14 befindlichen Kühlfluids abgezweigt und gelangt in die Leitung 46. Der Temperatursensor 58 ermittelt die Temperatur unmittelbar vor der Komponente 42. Ist das Kühlfluid ausreichend kalt, schaltet das Ventil 46 einen entsprechenden Durchlaß, so daß die Leitung 46 unmittelbar mit der Leitung 56 verbunden ist und das abgezweigte Kühlfluid unmittelbar zur Komponente 42 strömt. Auf diese Weise wird die gesamte Abwärme der Komponente 42 in den Kühlkreislauf 10 gefördert.

Liegt die im Temperatursensor 58 ermittelte Temperatur über einer vorbestimmten, zulässigen Höchsttemperatur für die Elektronikkomponenie, wird das Ventil 48 anders geschaltet, so daß das sich in der Leitung 46 befindliche Kühlfluid ganz oder teilweise über die Leitung 50 in den Kühler 52 gelangt, dort abgekühlt wird und über die Leitungen 54 und 56 schließlich zur Komponente 42 strömt.

Ein Nachteil dieser Lösung kann dann auftreten, wenn die Temperatur des Kühlfluids unmittelbar stromabwärts der Komponente 42 unterhalb einer vorbestimmten Grenztemperatur für den Eintritt des Kühlfluids in den Kühlkreislauf 10 liegt. Dann nämlich käme es zu einer unerwünschten Kühlung des Verbrennungsmotors 12, falls dieser bereits seine gewünschte Arbeitstemperatur erreicht hat.

Ein Vorteil der in Figur 2 dargestellten Ausführungsform ist jedoch, daß die Menge der Wärmeenergie, die in den Kühlkreislauf 10 gefördert wird. bedarfsgerecht durch das Ventil 48 gesteuert werden kann.

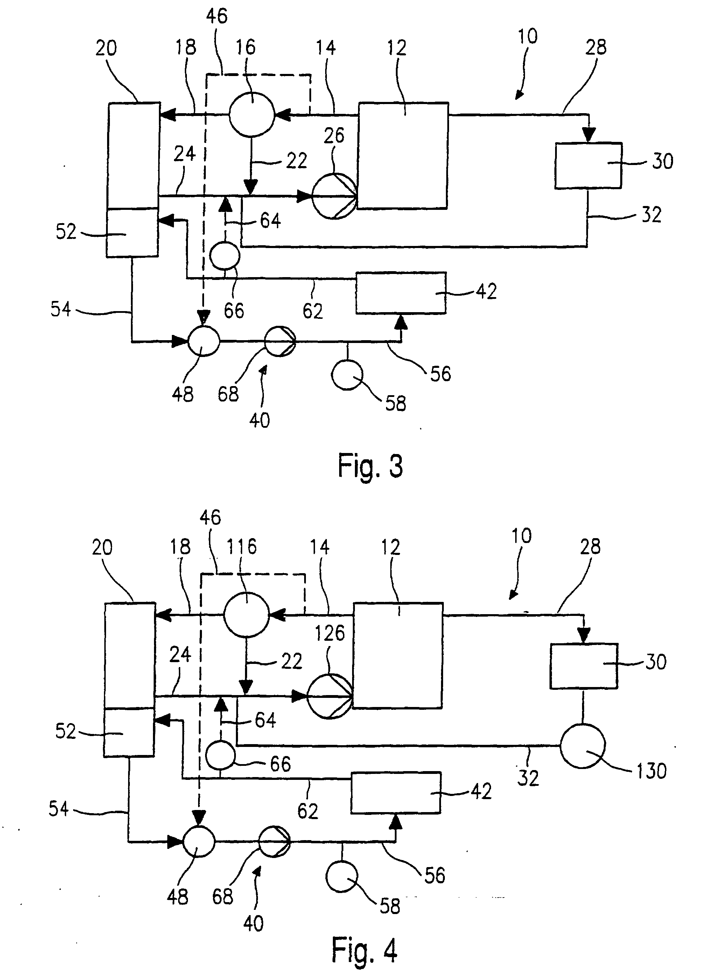

Eine noch genauere und bedarfsgerechtere Steuerung ist mittels der in Figur 3 dargestellten Ausführungsform der Vorrichtung zu erzielen.

Die in Figur 3 gezeigte Vorrichtung erlaubt es, die Kühlkreisläufe 10 und 40 vollständig voneinander zu entkoppeln. Hierzu wird anstelle der Leitung 44 eine Leitung 62 von der Komponente 42 unmittelbar zum Kühler 52 geführt. Von der Leitung 62 zweigt eine Leitung 64 zur Verbindungsleitung 24 ab, wobei in der Leitung 64 ein Ventil 66 sitzt. Als weiterer Unterschied zu der Ausführungsform nach Fig. 2 ist keine unmittelbare Verbindung der Leitung 46 mit dem Kühler 52 vorgesehen. Darüber hinaus ist in der Leitung 56 eine elektrische Kühlfluidpumpe 68 angeordnet, die den Volumenstrom des Kühlfluids im Kühlkreislauf 40 genau steuern kann. Die Ventile 48, 66 bilden eine Einrichtung zum Koppeln und Entkoppeln der Kühlkreisläufe 10, 40.

Die in Fig. 3 gezeigte Vorrichtung arbeitet nach folgendem Verfahren: So lange das Kühlfluid eine niedrige Temperatur, gemessen mittels des Temperatursensors 58, aufweist, strömt es aus dem Kühlkreislauf 10 über die Leitung 46 unmittelbar über das entsprechend geschaltete Ventil 48 in die Leitung 56. Das Ventil 66 ist ebenfalls offen, so daß ein Teil der ankommenden Strömung zum Kühlkreislauf 10 und ein Teil zum Kühler 52 gelangt. Steigt die Temperatur des Kühlfluids aber auf zu hohe Werte, wird das Ventil 48 so geschaltet, daß der Zustrom von Fluid über die Leitung 46 unterbunden wird. Die Leitungen 54 und 56 sind stattdessen miteinander verbunden. Das Ventil 66 wird geschlossen, so daß der Kühlkreislauf 40 vollständig vom Kühlkreislauf 10 abgekoppelt ist und das Kühlfluid über die Leitung 62 unmittelbar in den Kühler 52 und von dort über die Leitung 54 und die Leitung 56 zur Komponente 42 gelangen kann, die es kühlt. Der Kühlfluidstrom zur Kühlung der Komponente 42 wird jetzt ausschließlich über die elektronische Kühlfluidpumpe 68 umgepumpt. Die Kühlfluidpumpe 68 kann auch zugeschaltet sein, wenn beide Kühlkreisläufe 10, 40 miteinander gekoppelt sind, denn auf diese Weise kann der Volumenstrom des die Komponente 42 kühlenden Kühlfluids bedarfsgerecht und genau dosiert dem Kühlkreislauf 10 zugeführt werden, und der Volumenstrom ist nicht mehr abhängig von der Motordrehzahl. Ferner kann mit Hilfe der Kühlfluidpumpe 68 die Komponente 42 gekühlt werden, wenn der Verbrennungsmotor 12 abgeschaltet ist.

Bei der in Fig. 4 gezeigten Ausführungsform der Vorrichtung lassen sich die dem Kühlkreislauf 10 zugeführte Wärmemenge und auch der Wärmetransport innerhalb beider Kühlkreisläufe 10, 40 noch exakter steuern. Der Aufbau dieser Vorrichtung ist weitgehend identisch mit dem in Fig. 3 gezeigten. Anstatt einer mechanischen Kühlfluidpumpe 26 ist jedoch eine elektrische, den Volumenstrom innerhalb des Kühlkreislaufs 10 exakt steuernde Kühlfluidpumpe 126 vorgesehen. Anstelle des Thermostatventils 14 ist ein von außen ansteuerbares Ventil 116 vorgesehen. Ein Thermosiatventil führt zu einem sehr hohen Druckverlust, so daß die elektrischen Kühlfluidpumpen eine hohe Leistung haben müßten. Andere Bauformen von Drei-Wege-Ventilen zeichnen sich durch einen sehr niedrigen Druckverlust aus, so daß die Druckverluste in dem Kühlkreislauf 10 reduziert werden können. Darüber hinaus ist vorzugsweise nach dem Heizungswärmetauscher 30 noch ein Ventil 130 angeordnet.

Zur Reduzierung des Kraftstoffverbrauchs im Teillastbereich des Verbrennungsmotors 12 ist die maximal zulässige Grenztemperatur im Kühlkreislauf 10 höher als bei den bisherigen umgesetzten, üblichen Kühlkreisläufen. Um die Temperaturen in der gesamten Vorrichtung exakt steuern zu können und die Wärmeenergie an diejenigen Stellen der Vorrichtung zu bringen, die die Energie gerade benötigen, sind die Ventile 116 und 130 sowie die elektrische Kühlfluidpumpe 126 vorgesehen. Wird beispielsweise keine Wärme im Heizungswärmetauscher 30 abgeführt, kann das Ventil 130 eine Kühlfluidströmung durch die Leitungen 28 und 32 unterbinden, so daß der Kühlkreislauf 10 verkleinert wird. Bedarfsgerecht kann dann die dem Motor zugeführte Menge an Kühlfluid gesteuert werden, so daß der Motor entweder schnell erwärmt oder schnell abgekühlt werden kann.

Durch die Erhöhung der maximal zulässigen Kühlfluidtemperatur im Teillastbereich des Verbrennungsmotors 12 läßt sich der Kraftstoffverbrauch reduzieren. Im Teillastbetrieb wird bei der Ausführungsform nach der Fig. 4 eine Kühlfluidtemperatur von z.B. etwa 110°C zugelassen, wodurch das Schmiermittel des Verbrennungsmotors dünnflüssiger wird, wodurch sich wiederum der Verbrauch zusätzlich senken läßt. Noch höhere Temperaturen werden aber nicht angestrebt, da ansonsten der Schmierfilm reißen könnte. Die erhöhten zulässigen Temperaturen im Kühlkreislauf 10 können aber zu einer thermischen Überlastung der Komponente 42 führen, weshalb über eine entsprechende Ansteuerung der Ventile 48 und 66 der Kühlkreislauf 40 vom Kühlkreislauf 10 gegebenenfalls entkoppelt werden kann.

Eine entsprechende Erhöhung der Temperatur im Kühlkreislauf 10 im Teillastbetrieb ist im übrigen auch bei der in Fig. 3 gezeigten Ausführungsform möglich.

Anstelle der gezeigten Ausführungsformen ist es auch möglich, dem Kühlkreislauf 40 einen eigenen Heizungswärmetauscher zuzuordnen, so daß zwar nicht mehr der Verbrennungsmotor 12 beheizt werden kann, dafür aber ohne Wärmeverluste der Fahrgastinnenraum erwärmt wird.

Darüber hinaus ist die Koppelung der beiden Kühlkreisläufe 10, 40 auch innerhalb eines gemeinsamen Kühlers denkbar, der dann als Wärmetauscher dient.

Die Erfindung ist nicht nur auf die Nutzung der Energie beschränkt, die bei einem Pulswechselrichter für einen Startergenerator erzeugt wird. Dies ist nur ein bevorzugtes Ausführungsbeispiel. Ein anderes Beispiel für die sogenannte Leistungselektronik. deren Energie genutzt wird, ist z.B. ein Elektromotor eines Hybridfahrzeugs, weiches mehrere Elektromotoren zum Antrieb aufweist. Ein Elektromotor dient dabei z.B. zum Starten oder Anfahren des Fahrzeugs und wird nur kurzzeitig, dafür aber sehr stark belastet. Die in dem Elektromotor in kürzester Zeit erzeugte Wärme kann auch genutzt werden.

### Bezugszeichenliste

- 10:: Kühlkreislauf des Verbrennungsmotors
- 12:: Verbrennungsmotor
- 14:: Leitung
- 16:: Thermostatventil
- 18:: Leitung
- 20:: Kühler
- 22:: Leitung
- 24:: Verbindungsleitung
- 26:: mechanische Kühlfluidpumpe
- 28:: Leitung
- 30:: Heizungswärmetauscher
- 32:: Leitung
- 40:: Kühlkreislauf der Komponente
- 42:: elektronische Komponente
- 44:: Leitung
- 46:: Leitung
- 48:: Drei-Wege-Ventil
- 50:: Leitung
- 52:: Kühler
- 54:: Leitung
- 56:: Leitung
- 58:: Temperatursensor
- 62:: Leitung
- 64:: Leitung
- 66:: Ventil
- 68:: elektrische Kühlfluidpumpe
- 116:: ansteuerbares Ventil
- 126:: elektrische Kühlfluidpumpe
- 130:: Ventil

## Patentansprüche

1. Verfahren zum Transport von in einem Kraftfahrzeug entstehender Wärmeenergie, mit folgenden Schritten:
- Kühlen einer elektronischen Komponente (42) im Kraftfahrzeug und
- Weiterleiten der beim Kühlen der Komponente (42) abgeführten Wärmeenergie zu einem anderen Fahrzeugteil zu dessen Erwärmung,
- Vorsehen wenigstens eines Kühlkreislaufs (40) für die elektronische Komponente (42), über den die Wärme an einen Kühlkreislauf (10) eines Verbrennungsmotors (12) des Fahrzeugs abgegeben wird oder dem Fahrgastinnenraum zugeführt wird, **dadurch gekennzeichnet, dass** der Volumenstrom von Kühlfluid in wenigstens einem der beiden Kühlkreisläufe (10, 40) bedarfsgerecht über wenigstens eine in dem Kühlkreislauf (10, 40) integrierte elektrische Kühlfluidpumpe (68, 126) gesteuert wird und dass der Volumenstrom im Kühlkreislauf (10) des Verbrennungsmotors (12) abhängig von der Motortemperatur und dem Lastbereich des Verbrennungsmotors (12), in dem sich dieser gerade befindet, gesteuert wird.

2. Verfahren nach Anspruch 1, **dadurch gekennzeichnet, daß** die dem zu beheizenden Fahrzeugteil zugeführte Energiemenge gesteuert wird.

3. Verfahren nach Anspruch 1 oder 2, **dadurch gekennzeichnet, daß** in Abhängigkeit von der Temperatur des zu erwärmenden Fahrzeugteils und der der elektronischen Komponente (42) die Wärmezufuhr zu dem zu erwärmenden Fahrzeugteil unterbrochen wird.

4. Verfahren nach einem der vorhergehenden Ansprüche, **dadurch gekennzeichnet, daß** der elektronischen Komponente (42) ein Kühlkreislauf (40) mit einem eigenen Kühler (52) zugeordnet ist und daß abhängig von einer vorbestimmten zulässigen Höchsttemperatur der Komponente (42) und/oder einer vorbestimmten Grenztemperatur des zu beheizenden Fahrzeugteils der Kühlkreislauf (40) der Komponente (42) mit dem Kühlkreislauf (10) des Fahrzeugteils oder dem eigenen Kühler (52) gekoppelt wird.

5. Verfahren nach einem der vorhergehenden Ansprüche, **dadurch gekennzeichnet, daß** die Kühlkreisläufe (40, 10) der Komponente (42) und des Verbrennungsmotors (12) dann voneinander entkoppelt werden, wenn der Kühlkreislauf (40) der Komponente (42) zu einer Kühlung des Verbrennungsmotors (12) führen würde.

6. Verfahren nach Anspruch 5, **dadurch gekennzeichnet, daß** der Kühlkreislauf (40) der Komponente (42) Wärmeenergie dann zum eigenen Kühler (52) fördert, wenn der Kühlkreislauf (40) der Komponente (42) zu einer Kühlung des Verbrennungsmotors (12) führen würde.

7. Verfahren nach einem der vorhergehenden Ansprüche, **dadurch gekennzeichnet, daß** es bei ausgeschaltetem Verbrennungsmotor (12) angewandt wird.

8. Vorrichtung zum Transport von in einem Kraftfahrzeug entstehender Wärmeenergie, wobei eine elektronische Komponente (42) mit einer wärmeabiuhrenden Leitung (44, 62, 64) gekoppelt ist und die Leitung (44, 62, 64) wiederum so mit einem anderen Fahrzeugteil gekoppelt ist, dass Wärmeenergie der Komponente (42) über die Leitung (44, 62, 64) an das Fahrzeugteil abgegeben wird, wobei die Leitung (44, 62, 64) Teil eines der Komponente (42) zugeordneten Kühlkreislauf (40) ist, der mit dem Kühlkreislauf (10) eines Verbrennungsmotors (12) verbunden ist, **dadurch gekennzeichnet, dass** die Vorrichtung so ausgebildet ist, dass der Volumenstrom im Kühlkreislauf (10) des Verbrennungsmotors (12) abhängig von der Motortemperatur und dem Lastbereich des Verbrennungsmotors (12), indem sich dieser gerade befindet, gesteuert wird.

9. Vorrichtung nach Anspruch 8, **dadurch gekennzeichnet, daß** die Kühlkreisläufe (10, 40) durch eine Einrichtung miteinander koppelbar und voneinander entkoppelbar sind.

10. Vorrichtung nach Anspruch 8 oder 9, **dadurch gekennzeichnet, daß** die Kühlkreisläufe (10, 40) miteinander so verbunden sind, daß Kühlfluid des einen Kühlkreislaufs (10, 40) in den anderen Kühlkreislauf (40, 10) strömen kann.

11. Vorrichtung nach einem der Ansprüche 8 bis 10, **dadurch gekennzeichnet, daß** jedem Kühlkreislauf (10, 40) ein eigener, wahlweise zuschaltbarer Kühler (20, 52) zugeordnet ist.

12. Vorrichtung nach einem der Ansprüche 8 bis 11, **dadurch gekennzeichnet, daß** wenigstens eine elektrische Kühlfluidpumpe (68, 126) in wenigstens einem Kühlkreislauf (40, 10) vorgesehen ist.

13. Vorrichtung nach einem der Ansprüche 8 bis 12, **dadurch gekennzeichnet, daß** in wenigstens einem der Kühlkreisläufe (10, 40) ein Heizungswärmetauscher (30) zum Beheizen des Fahrgastinnenraums vorgesehen ist.

14. Vorrichtung nach einem der Ansprüche 8 bis 13, **dadurch gekennzeichnet, daß** die elektronische Komponente (42) ein Pulswechselrichter für einen Startergenerator ist.

## Claims

1. Method for transporting heat energy which is produced in a motor vehicle, having the following steps:
- cooling an electronic component (42) in the motor vehicle and
- passing on the heat energy dissipated during cooling of the component (42) to another vehicle part in order to heat up said part,
- providing at least one cooling circuit (40) for the electronic component (42), by means of which circuit the heat is emitted to a cooling circuit (10) of an internal combustion engine (12) of the vehicle or is supplied to the passenger compartment,
**characterized in that** the volume flow of cooling fluid is controlled according to requirements in at least one of the two cooling circuits (10, 40) by means of at least one electric cooling-fluid pump (68, 126) which is integrated in the cooling circuit (10, 40), and **in that** the volume flow in the cooling circuit (10) of the internal combustion engine (12) is controlled as a function of the engine temperature and the load range of the internal combustion engine (12) in which the said volume flow is currently taking place.

2. Method according to Claim 1, **characterized in that** the amount of energy which is supplied to the vehicle part which is to be heated is controlled.

3. Method according to Claim 1 or 2, **characterized in that** the heat supply to the vehicle part which is to be heated up is interrupted as a function of the temperature of the vehicle part which is to be heated up and as a function of the temperature of the electronic component (42).

4. Method according to one of the preceding claims, **characterized in that** the electronic component (42) has an associated cooling circuit (40) having its own radiator (52), and **in that** the cooling circuit (40) of the component (42) is coupled to the cooling circuit (10) of the vehicle part or to its own radiator (52) as a function of a predetermined maximum permissible temperature of the component (42) and/or as a function of a predetermined limit temperature of the vehicle part which is to be heated.

5. Method according to one of the preceding claims, **characterized in that** the cooling circuits (40, 10) of the component (42) and of the internal combustion engine (12) are decoupled from one another when the cooling circuit (40) of the component (42) would lead to cooling of the internal combustion engine (12).

6. Method according to Claim 5, **characterized in that** the cooling circuit (40) of the component (42) conveys heat energy to its own radiator (52) when the cooling circuit (40) of the component (42) would lead to cooling of the internal combustion engine (12).

7. Method according to one of the preceding claims, **characterized in that** it is applied when the internal combustion engine (12) is switched off.

8. Apparatus for transporting heat energy which is produced in a motor vehicle, wherein an electronic component (42) is coupled to a heat-dissipating line (44, 62, 64) and the line (44, 62, 64) is in turn coupled to another vehicle part such that heat energy from the component (42) is emitted to the vehicle part by means of the line (44, 62, 64), wherein the line (44, 62, 64) is part of a cooling circuit (40) which is associated with the component (42) and which is connected to the cooling circuit (10) of an internal combustion engine (12), **characterized in that** the apparatus is designed such that the volume flow in the cooling circuit (10) of the internal combustion engine (12) is controlled as a function of the engine temperature and the current load range of the internal combustion engine (12).

9. Apparatus according to Claim 8, **characterized in that** the cooling circuits (10, 40) can be coupled to one another and decoupled from one another by one device.

10. Apparatus according to Claim 8 or 9, **characterized in that** the cooling circuits (10, 40) are connected to one another such that cooling fluid of one cooling circuit (10, 40) can flow into the other cooling circuit (40, 10).

11. Apparatus according to one of Claims 8 to 10, **characterized in that** each cooling circuit (10, 40) has its own, associated radiator (20, 52) which can optionally be switched on.

12. Apparatus according to one of Claims 8 to 11, **characterized in that** at least one electric cooling-fluid pump (68, 126) is provided in at least one cooling circuit (40, 10).

13. Apparatus according to one of Claims 8 to 12, **characterized in that** a heating heat exchanger (30) for heating the passenger compartment is provided in at least one of the cooling circuits (10, 40).

14. Apparatus according to one of Claims 8 to 13, **characterized in that** the electronic component (42) is a pulse-controlled inverter for a starter generator.

## Revendications

1. Procédé de transport d'énergie thermique dégagée dans un véhicule automobile comprenant les étapes suivantes :
- on refroidit un composant électronique (42) situé dans le véhicule automobile et
- on transmet l'énergie thermique extraite lors du refroidissement du composant (42) à une autre partie du véhicule pour le chauffage de cette dernière,
- on prévoit au moins un circuit de refroidissement (40) pour le composant électronique (42), par l'intermédiaire duquel la chaleur est cédée à un circuit de refroidissement (10) d'un moteur à combustion interne (12) du véhicule, ou envoyée à l'habitacle,
**caractérisé en ce que**
le débit volumique de fluide de refroidissement dans au moins l'un des deux circuits de refroidissement (10, 40) est commandé à la demande, au moyen d'au moins une pompe à fluide de refroidissement électrique (68, 126) intégrée dans le circuit de refroidissement (10, 40), et le débit volumique dans le circuit de refroidissement (10) du moteur à combustion interne (12) est commandé en fonction de la température du moteur et de la plage de charge du moteur à combustion interne (12) dans laquelle ce dernier se trouve au moment considéré.

2. Procédé selon la revendication 1,
**caractérisé en ce que**
la quantité d'énergie envoyée à la partie du véhicule à chauffer est commandée.

3. Procédé selon la revendication 1 ou 2,
**caractérisé en ce que**
l'envoi de chaleur à la partie du véhicule à chauffer est interrompu en fonction de la température de la partie du véhicule à chauffer et de celle du composant électronique (42).

4. Procédé selon une des revendications précédentes,
**caractérisé en ce qu'**
au composant électronique (42) est affecté un circuit de refroidissement (40) équipé de son propre refroidisseur (52), et en fonction d'une température maximale admissible prédéterminée du composant (42) et/ou d'une température limite prédéterminée de la partie du véhicule à chauffer, le circuit de refroidissement (40) du composant (42) est couplé au circuit de refroidissement (10) de la partie de véhicule ou à son propre refroidisseur (52).

5. Procédé selon une des revendications précédentes,
**caractérisé en ce que**
les circuits de refroidissement (40, 10) du composant (42) et du moteur à combustion interne (12) sont désaccouplés l'un de l'autre dans le cas où le circuit de refroidissement (40) du composant (42) entraînerait un refroidissement du moteur à combustion interne (12).

6. Procédé selon la revendication 5,
**caractérisé en ce que**
le circuit de refroidissement (40) du composant (42) envoie de l'énergie thermique à son propre refroidisseur (52) dans le cas où le circuit de refroidissement (40) du composant (42) entraînerait un refroidissement du moteur à combustion interne (12).

7. Procédé selon une des revendications précédentes,
**caractérisé en ce qu'**
il est appliqué lorsque le moteur à combustion interne (12) est arrêté.

8. Dispositif pour le transport d'énergie thermique dégagée dans un véhicule automobile, dans lequel un composant électronique (42) est accouplé à une conduite (44, 62, 64) qui évacue la chaleur et la conduite (44, 62, 64) est à son tour accouplée à une autre partie du véhicule de telle manière que l'énergie thermique du composant (42) soit cédée à la partie du véhicule par l'intermédiaire de la conduite (44, 62, 64), la conduite (42, 62, 64) faisant partie d'un circuit de refroidissement (40) affecté au composant (42) et relié au circuit de refroidissement (10) d'un moteur à combustion interne (12),
**caractérisé en ce que**
le dispositif est constitué pour commander le débit volumique circulant dans le circuit de refroidissement (10) du moteur à combustion interne (12), en fonction de la température du moteur et de la plage de charge du moteur à combustion interne (12) dans laquelle ce dernier se trouve au moment considéré.

9. Dispositif selon la revendication 8,
**caractérisé en ce que**
les circuits de refroidissement (10, 40) peuvent être accouplés l'un à l'autre et désaccouplés l'un de l'autre par un dispositif.

10. Dispositif selon la revendication 8 ou 9,
**caractérisé en ce que**
les circuits de refroidissement (10, 40) sont reliés entre eux de manière que le fluide de refroidissement d'un circuit de refroidissement (10, 40) puisse entrer dans l'autre circuit de refroidissement (40, 10).

11. Dispositif selon une des revendications 8 à 10,
**caractérisé en ce qu'**
à chaque circuit de refroidissement (10, 40), est affecté un refroidisseur (20, 52) qui lui est propre et qui peut éventuellement être mis en circuit.

12. Dispositif selon une des revendications 8 à 11,
**caractérisé par**
au moins une pompe à fluide de refroidissement électrique (68, 126) dans au moins un circuit de refroidissement (40, 10).

13. Dispositif selon une des revendications 8 à 12,
**caractérisé en ce que**
dans au moins un des circuits de refroidissement (10, 40), un échangeur de chaleur de chauffage (30) est prévu pour chauffer l'habitacle.

14. Dispositif selon une des revendications 8 à 13,
**caractérisé en ce que**
le composant électronique (42) est un onduleur à impulsions pour un démarreur-générateur.
